# EUROPEAN PATENT APPLICATION

(11) **EP 2 581 432 A1**
(43) Date of publication of application: **17.04.2013**
(21) Application number: 11184735.6
(22) Date of filing: 11.10.2011
(51) Int. Cl.: C09K 8/58

(54) **Enhanced hydrocarbon recovery**

(71) Applicant: Nederlandse Organisatie voor Toegepast -Natuurwetenschappelijk Onderzoek TNO, 2628 VK Delft (NL)
(72) Inventor: Craenmehr, Eric Gerardus Maria, 2628 VK Delft (NL); Papen-Botterhuis, Nicole Ellen, 2628 VK Delft (NL)
(74) Representative: Jansen, Cornelis Marinus

(57) **Abstract**

The invention is directed to a method for enhanced hydrocarbon recovery and to the use of a specific liquid composition.

The method of the invention comprises
- injecting into a hydrocarbon reservoir a liquid composition that comprises a polymer and particles of an inorganic material in a liquid, wherein the polymer is linked to the particles of the inorganic material by means of a functional group, wherein the polymer has a lower critical solution temperature in the liquid, and wherein the liquid composition exhibits thermo-induced gelling;
- gelling the liquid composition due to a change in concentration of one or more ionic species.

## Description

The invention is directed to a method for enhanced hydrocarbon recovery and to the use of a specific liquid composition.

The extraction of hydrocarbons (such as oil or natural gas) from subterranean formations is involved with a number of challenges. Due to the exhaustibility of these hydrocarbons, it becomes more interesting to explore techniques for enhanced recovery, thereby enabling the extraction of more hydrocarbons (and of improved quality) than when employing conventional methods.

Hydrocarbons can be obtained from subterranean geological formations by drilling wellbores that provide partial flow paths which allow the hydrocarbons to reach the surface. Hydrocarbons migrate via flow paths connecting a reservoir within a formation and a wellbore. Depending on the geological situation on site and the specific conditions in the wellbore, various problems are known to occur.

Impeded flow paths can lead to insufficient hydrocarbon production. In such cases, various techniques are used to stimulate the hydrocarbon production. For example, it is common to inject specialised fluids via the wellbore into the formation at sufficient pressures to create fractures in the formation rocks, thereby creating channels through which the hydrocarbons can more readily flow into the wellbore. This technique is referred to as fracturing, or hydraulic fracturing, and the specialised fluids used in the technique are referred to as fracturing fluids. Such a fracturing fluid ideally imparts a minimal pressure drop in a pipe within the wellbore during placement and has an adequate viscosity to carry particulate material which prevents the fracture from closing. Moreover, the fracturing fluid should have a low leak-off rate (i.e. the rate at which a fracturing fluid flows from the fracture into the surrounding formation), thereby inhibiting fluid migration into the formation rocks and promoting the creation and propagation of the fracture. Examples of proposed fracturing fluids include linear polymeric gels comprising guar, hydroxyethyl cellulose, and cross-linked polymer gels (such as those based on guar cross-linked with borate or polymers cross-linked with metal ions). Thermoviscosifying polymers that contain a hydrolysable skeleton and side chains having a lower critical solution temperature property and which have a viscosity which increases or stabilises with temperature, have also been suggested. However, large polymer residues can deteriorate the permeability of hydrocarbon bearing formations. Viscoelastic surfactant (VES) molecules that can aggregate into overlapping micelles which confer the necessary viscosity to the fluid to carry the particular material during fracturing were proposed as alternative. However, these VES fracturing fluids suffer from a high leak-off rate and are costly. US-A-2007/0 281 869 in this respect discloses a thermoviscoelastic system comprising a hydrophobically modified polymer and a viscoelastic surfactant in an aqueous medium, wherein the polymer has a lower critical solution temperature and the fluid has a low viscosity at a temperature just below the lower critical solution temperature relative to the fluid viscosity just above the lower critical solution temperature.

Another challenge is that conventional recovery methods are known to allow only partial extraction of the hydrocarbon contained in a reservoir (in particular for the extraction of crude oil). In order to increase the quantity of hydrocarbon extractable from a reservoir it is known to introduce into the reservoir a fluid, generally water or an aqueous polymer solution, which conveys the hydrocarbon through the pores in the rock to the extraction well. However, because many reservoirs are composed of several types of rock having different permeability, the injected fluid tends to channel through the zones of greater permeability, without flushing or only partly flushing the zones of lesser permeability. This behaviour can severely limit recovery of the hydrocarbon that is contained in the reservoir. To solve this problem, techniques have been proposed whose purpose is to reduce the permeability of the high-permeability zones. These techniques consist of partially or completely occluding these zones after extracting the hydrocarbon contained in them, so as to deviate the flow of fluids subsequently fed into the reservoir towards the zones of lesser permeability, and so recover the hydrocarbon contained in them. In this light, EP-A-0 390 282 discloses a gellable aqueous composition that comprises a high molecular weight water soluble polymer that is cross-linkable by means of chromium(III) ions, a water-soluble inorganic chromium(III) salt and a gelling retardant organic ligand. The use of the gelling retardant ligand is said to allow a control over the onset of gelling over a range of from one day to two months or more.

Yet a further known problem in the recovery of hydrocarbons (in particular crude oil) is high water production during the extraction of hydrocarbon from the well. Not only does this increase the production cost and create a water disposal problem, but in addition it induces operation problems, such as fines production, corrosion and scale formation. To increase the hydrocarbon recovery it is necessary to apply effective methods for controlling the water production in wells. Such methods are, for instance, discussed in a review article by Karmakar et al. (Indian Journal of Chemical Technology 2006, 13, 162-167). One of the proposed solutions to reduce the production of unwanted water is the placement of full blocking gel systems in reservoir layers that produce the water. Most polymer gel systems available in the industry are placed in the near well bore before cross-linking takes place. After the injection of the polymer system in the matrix of a target zone, the components react and form a three-dimensional polymer structure, referred to as gel. This gel can reduce or completely block water flows through the porous medium. Another method involves injection of a suitable polymer solution into the production well, along with a cross-linker, initiated by metal ions or organic radicals. The polymer solution and the cross-linker then react to form an annulus of gel around the production well.

Existing fluids that can be used for these enhanced recovery techniques often suffer from relatively high initial viscosities, which makes them difficult to handle. In addition, this relatively high initial viscosity does not always enable a correct positioning of the fluid at the desired locations in the reservoir, such as sufficiently deep into pores with small diameters. A further disadvantage is that these conventional systems suffer from a "viscosity drop" when they are heated by the reservoir.

Furthermore, a disadvantage of existing fluids is that they often require large amounts of expensive compounds. It would be highly desirable if the amount of expensive components could be decreased, while achieving the similar, the same, or even improved efficiency.

Objective of the invention is to provide a solution for one or more of the above described problems.

The inventors found that this objective can, at least in part, be met by a method wherein a specific organic-inorganic hybrid composition is injected into a hydrocarbon reservoir.

Therefore, in a first aspect the invention is directed to a method for enhanced hydrocarbon recovery comprising
- injecting into a hydrocarbon reservoir a liquid composition that comprises a polymer and particles of an inorganic material in a liquid, wherein the polymer is linked to the particles of the inorganic material by means of a functional group, wherein the polymer has a lower critical solution temperature in the liquid, and wherein the liquid composition exhibits thermo-induced gelling;
- allowing the liquid composition to gel due to a change in concentration of one or more ionic species.

The method of the invention allows gelling of the liquid composition in the hydrocarbon reservoir using the concentration of one or more ionic species as a trigger. The change in concentration of one or more ionic species may be an increase or a decrease in concentration of one or more ionic species. Advantageously, the trigger used for gelling the liquid composition is a change in concentration of one or more ionic species. Accordingly, the liquid composition is capable of being gelled isothermally. In comparison to methods wherein a difference in temperature is used as the trigger, the invention significantly broadens the range of potential polymers with lower critical solution temperature characteristics since the lower critical solution temperature of the polymer does not necessarily has to match with the temperatures on site. For example, in accordance with the invention polymers which show gelling at relatively high lower critical solution temperature (and which would therefore not be considered when using temperature as the trigger) can now be considered, because the temperature at which gelling occurs can be tuned based on concentration of ionic species.

The method can advantageously be applied independent of the reservoir temperature. Hence, it is not necessary to change the polymer depending on the temperature of the reservoir or on the temperature of a specific location within one reservoir. Moreover, the invention allows a control over the exact location of gelling, independent of the temperature.

In accordance with the method of the invention, the liquid composition gels when the lower critical solution temperature of the composition is lowered below operating temperature due to addition or extraction of one or more ionic species.

In addition, the liquid composition used in the method of the invention can be prepared very easily, and it has many degrees of freedom for tuning the method to the desires of the user, in particular with respect to the type and properties of the hydrocarbon being extracted and the specific geological formation of the reservoir.

The use of an organic-inorganic hybrid composition in accordance with the method of the invention is highly advantageous, because it allows a reduction of the overall amount of polymer used, thereby reducing the amounts of expensive materials. Moreover, the applied polymer chains can have, on average, a lower molecular weight than when they are applied without particles of inorganic material. As a result, the initial viscosity of the composition can be lower than when using a polymer with lower critical solution temperature characteristics in the absence of particles of inorganic material. The concentration of the particles can be maintained low so as to maintain a low initial viscosity.

In accordance with the method of the invention the liquid composition is allowed to gel by a change in concentration of one or more ionic species. In other words, the liquid composition is gelled by actively or passively changing the concentration of one or more ionic species of the liquid composition. This change can be an increase or a decrease in concentration of one or more ionic species.

The change in concentration of one or more ionic species as described in this application is meant to refer to the change of the concentration of the one or more ionic species in the liquid composition.

A wide variety of ionic species can be employed in the method of the invention. In the context of this application, an ionic species can comprise one or more selected from the group consisting of salts (including organic salts), acids, bases, and ionic surfactants.

A decrease in ion concentration can, for example, be achieved after injecting the liquid composition with relatively high concentration of one or more ionic species into the reservoir after which the one or more ionic species ions selectively adsorb at the formation surrounding the reservoir thereby inducing a decrease concentration of one or more ionic species of the liquid composition in the reservoir. In an embodiment, the change concentration of the one or more ionic species is an increase in the concentration of the one or more ionic species.

An increase in concentration of one or more ionic species can be provided in different ways. For instance, it can be provided by the reservoir itself, because there is an elevated concentration of ionic species within the reservoir itself (e.g. due to geological reasons). The reservoir itself may, for instance, contain naturally occurring ions or salts that lead to an increase in concentration of ionic species of the liquid composition when it is injected into the hydrocarbon reservoir. Alternatively, the increase in concentration of one or more ionic species may be invoked by a prior or subsequent injection into the hydrocarbon reservoir of a solution with high concentration of ionic species (such as a concentrated salt solution). It is also possible that these two alternatives are combined, so as to further increase an already existing elevated concentration of ionic species within a reservoir.

In an embodiment, the change in concentration of the one or more ionic species comprises injection into the reservoir of a solution of the one or more ionic species, wherein the solution has a concentration of the one or more ionic species of at least of 10 wt.% based on total weight of the solution, such as a concentration of 15 wt. % or more, 20 wt. % or more, 25 wt. % or more, or 30 wt.% or more.

The change in concentration of one or more ionic species may also comprise an increase in H⁺ or OH⁻ ions, and accordingly represent a change in pH. The change in pH is preferably a change in the pH value of the surrounding of the liquid composition of 2 or more, such as 3 or more, or 4 or more. For example, the pH may change from a value in the range of 6-8 to a value of 10 or more. Alternatively, the pH may change from value in the range of 6-8 to a value of 4 or less.

It is further possible that the change in concentration of one or more ionic species comprises a change in the concentration of an ionic surfactant. Suitable surfactants for use in the method of the invention, for instance, include alkyl or alkyl benzene sodium sulphonates (such as sodium dodecyl sulphate, sodium dodecyl benzene sulphonate), alkyltrimethylammonuim salts (such as cetyltrimethylammonium bromide, cetyltrimethylammonium chloride and dodecyltrimethylammonium chloride), cetylpyridinium chloride, sodium cholate and the like.

Depending on the specific combination of polymer and ion, either an increase in concentration of one or more ionic species will give rise to gelling or a decrease in concentration of one or more ionic species. For example, an increase in the concentration of sodium chloride can lead to the gelling of a liquid composition based on amine terminated polyethylene-co-propylene glycol polymer or to the gelling of a liquid composition based on ammonium terminated poly(N-isopropylacrylamide), while a decrease in the concentration of sodium dodecyl sulphate can lead to the gelling of a liquid composition based on amine terminated poly(N-isopropylacrylamide). Depending on de desired application, the skilled person will be able to select the proper combination of polymer and ion trigger. The effect of various ionic species on the LCST of poly(N-isopropylacrylamide) have, for instance, been published by Patel et al. (J. Dispersion Sci. Techno. 2011, 32, 1111-1118). These variables allow a fine tuning of the desired gelling temperature that is suitable for the specific hydrocarbon reservoir and environmental conditions.

In an embodiment, the change in concentration of one or more ionic species is an increase in the concentration of at least one ionic species of 0.5 wt.% or more based on the amount of water in the liquid composition, preferably an increase of 1 wt.% of more, such as 5 wt.% or more, 10 wt.% or more, 20 wt. % or more, or 30 wt. % or more.

Advantageously, the invention does not require a change in temperature so that the method of the invention can be performed isothermally, or quasi-isothermally. The temperature of the liquid composition before and after injection into the hydrocarbon reservoir can therefore be the equal, or nearly equal. For example, the difference in temperature of the liquid composition before and after injection into the hydrocarbon reservoir can be 90 °C or less, preferably 60 °C or less, such as 30 °C or less, or 15 °C or less.

In accordance with the invention, the number average molecular weight of the polymer can be relatively low due to the presence of inorganic particles. As a result the initial viscosity of the liquid composition can be low which enables easy handling of the composition. The liquid composition can accordingly have a complex modulus, |G*|, at 20 °C before injection in the range of 10⁻⁵ - 10³ Pa at 20 °C, as determined by oscillating rheology methods using a plate-plate geometry, such as 10⁻³ - 10² Pa, preferably in the range of 10⁻¹ - 10² Pa.

The method of the invention can suitably be applied for various hydrocarbon extractions. Hence, the hydrocarbon can comprise oil (in particular crude oil) and/or natural gas.

Once the liquid composition has gelled as a consequence of the change in ion concentration, the gelled composition may be liquefied again later on. For such reversible gelling it is required that the liquid composition exhibits reversible thermal gelling as will be discussed below. Such an additional step of liquefying the gelled composition may be achieved by at least partly reversing the change in ion concentration in the reservoir. This additional liquefying step can be used for removing the gelled composition from the reservoir once it is no longer needed.

It is further possible, after the liquid composition has gelled, to inject a liquid into the reservoir so as to move the gelled composition. For example, the additional injection can push the gelled composition further into the pores in order to secure blockage thereof.

In the liquid composition that is used in the method of the invention, the polymer is linked to the particles of the inorganic material by means of a functional group that is present in the polymer. The linkage between the polymer and the inorganic particles can be either physical or chemical in nature, e.g. an ionic, covalent or coordinative linkage or hydrogen bonding.

The polymer has a lower critical solution temperature in the used liquid. This means that the polymer exhibits lower critical solution temperature behaviour in the liquid. As will be understood by the skilled person, at a temperature below the lower critical solution temperature the polymer will display hydrophilic properties as a result of which the liquid composition will be liquid. At a temperature similar to or above the lower critical solution temperature the polymer will display hydrophobic properties as a result of which the liquid composition will gel. In other words, above the lower critical solution temperature the liquid composition will become a gel. Hence, the liquid composition shows thermo-induced gelling.

Preferably, the liquid composition exhibits reversible thermal gelling properties. This means that the liquid composition will become a gel when the temperature of the composition is above the lower critical solution temperature of the polymer solution, whereas the gelled composition will turn into a liquid again when the temperature of the composition is decreased below the lower critical solution temperature of the polymer. It is noted that in some embodiments such reversible thermal gelling properties are not observed. This may be due to a rearrangement of polymer linked to the inorganic particles, leading to cross-linking of the system, which then remains a gel at a temperature blow the lower critical solution temperature of the polymer. Irreversible thermal gelling properties are not observed in case the polymer has only one functional group that can link to the inorganic particles.

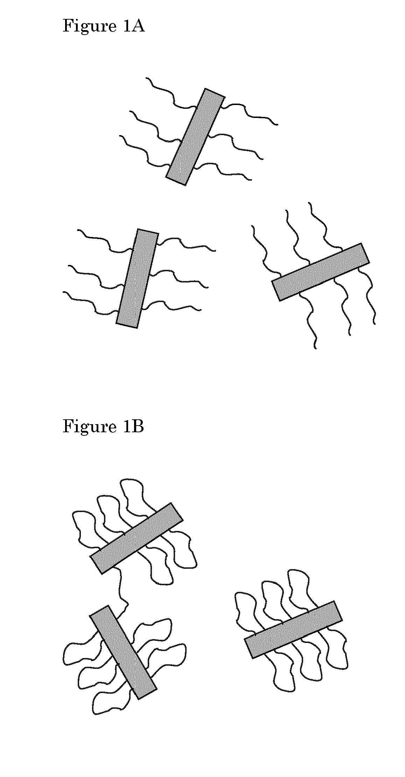

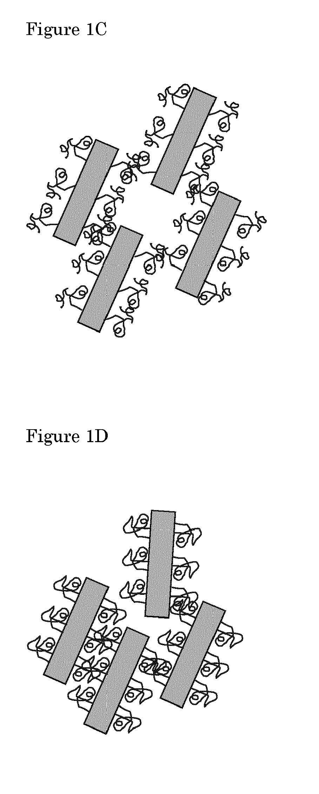

Without wishing to be bound by any theory, the inventors believe that upon mixing of the inorganic particles with the polymer solution at a temperature below the lower critical solution temperature, the polymer forms a linkage with the inorganic particles in such a way that the polymers are linked to inorganic particles, but that the inorganic particles are not interconnected to a large extent (i.e. there is no cross-linked system in which the inorganic particles are cross-linked through the polymers). This situation is schematically shown in figures 1A and 1B. In figure 1A, polymers are linked with only one functional group to the particles, which does not lead to interconnection of distinct particles. In figure 1B, polymers are linked with more than one functional group to the particles, but there is only very limited interconnection. In both cases, the system as a whole remains liquid. When, in accordance with the method of the invention the lower critical solution temperature is lowered by a change in concentration of one or more ionic species, such that the composition reaches a temperature above the lower critical solution temperature, the polymer becomes more hydrophobic and will assemble with other polymers. When polymers linked to distinct inorganic particles (i.e. one polymer linked to one inorganic particle and another polymer linked to another inorganic particle) assemble together, they form a kind of physical cross-links, which interconnect the two distinct inorganic particles. Thus, at a temperature above the lower critical solution temperature, distinct inorganic particles are physically cross-linked by polymers that are linked to each of them. This situation is schematically shown in figure 1C and 1D. The cross-linked system thus formed will not be soluble in the liquid anymore, but will form a gel holding part or all of the liquid inside.

Suitably, the particles of the inorganic material are interconnected by a polymer chain to on average no more than two other particles of the inorganic material. The term "on average" in this context is intended to mean that the number average of other inorganic particles interconnected to any inorganic particle is no more than two, not counting inorganic particles that are not interconnected to any other particles. In effect, this means that the inorganic particles do not form a chemical cross-linked network with the polymer.

Preferably, at least 90 % of the particles of the inorganic material are not interconnected to other particles of the inorganic material.

In the liquid composition of the invention, in case of ionic binding between the polymer and the particles, the ratio of the functional groups on the polymer (A) and the ion exchange capacity of the particles (B) is smaller than 1.1 (A/B). This means that only a small amount of the inorganic materials needs to be used when compared with the amount of polymer. Preferably the ratio of the functional groups on the polymer (A) and the ion exchange capacity of the particles (B) is smaller than 1.0 (A/B).

Suitably, the liquid is present in an amount in the range of 60-99 wt.% based on total composition, such as in the range of 70-99 wt.% or 80-99 wt.%.

Suitably, the liquid comprises water and optionally one or more further solvents. Preferably, water is present in an amount of more than 50 wt.% based on total weight of the liquid. Suitably, the optional one or more further solvents are selected from the group consisting of glycols (such as ethylene glycol) and alcohols (such as methanol, ethanol, n,-propanol, isopropanol, n-butanol, sec-butanol, isobutanol, and tert-butanol), formic acid, acetic acid, dimethylformamide, dimethylsulphoxide, acetone, tetrahydrofurane, and dioxane. In a preferred embodiment of the invention, the liquid comprises water and ethylene glycol. In another preferred embodiment, the liquid consists of water. In an embodiment, the liquid comprises salts or other solutes.

The lower critical solution temperature of the polymer in the liquid composition before injection into the reservoir can be in the range of from -40 °C to 300 °C. Preferably, the lower critical solution temperature of the polymer is in the range of from -20 °C to 125 °C. After injection into the reservoir and change of concentration of the ionic species, the lower critical solution temperature of the polymer in the liquid composition can be in the range of from 60 °C to 125 °C.

The polymer to be used in accordance with the method of the invention can suitably comprise one or more selected from the group consisting of polymers and copolymers of acrylamides, methacrylamides, methacrylic acid, hydroxyalkylacrylates, hydroxyalkylmethacrylates, allylamine, oligo(ethylene glycol)methacrylates and *N*-vinyl-*N,N*-disubstituted amides (such as N-vinylcaprolactam or vinyl ethylimidazole), poly(vinyl methyl ether), poly(siloxyethylene oxide), xyloglucan, poly(vinyl methyl oxazolidone), poly(vinyl pyrrolidone), poly(N-vinylcaprolactam), poly(phosphazene) derivatives, hyperbranched polyester amides, polymers and copolymers of ethylene glycol and propylene glycol, surfactants containing oligo(ethylene glycol), polymers and copolymers of vinyl acetate and vinyl alcohol, and cellulose derivatives.

The functional group(s) present in the polymer can suitably be chosen from the group consisting of hydroxyl, amine, epoxide, acid, anhydride, ammonium, carboxylate, sulphate, sulphonate, sulphinate, silane, siloxane, phosphate, phosphonate, phosphinate, phosphite, phosphinite, sulphide, disulphide, maleic acid, phosphine, phosphine oxide, phosphonium, sulphonium, oxonium, ether and aldehyde.

Preferably, the polymer comprises functional end groups like mono-, di-, or trialkylammonium-terminated poly(N-isopropylacrylamide), sulphonate-terminated poly(N-isopropylacrylamide), poly(*N*-isopropylacrylamide-co-allylamine), poly(*N*-isopropylacrylamide-co-trimethylaminoethylmethacrylate), poly(N-isopropylacrylamide-co-4-vinylbenzenesulphonate), or polyetheramine. Other suitable functional end groups include carboxylate, sulphonate, phosphonium, and siloxane. Polymers used in the method of the invention can be terminated with these functional end groups as well.

The polymer in the liquid composition of the invention can suitably have a number average molecular weight in the range of 500-100 000 g/mol as determined by gel permeation chromatography (GPC) with tetrahydrofuran (THF) as eluent relative to polystyrene standards. Preferably, the polymer has a number average molecular weight in the range of 1000-10 000 g/mol.

The particles used in the method of the invention are derived from an inorganic material. The inorganic material can suitably comprise one or more selected from the group consisting of minerals, silicates, metal oxides, synthetic clays, and layered double hydroxides. In an embodiment, the inorganic material comprises one or more selected from hydrotalcite, smectite, laponite, bentonite, hectorite, saponite, vermiculite, chlorite, sepiolite, palygorskite, illite and magadiite. The inorganic material can, for instance, comprise hydrotalcite, laponite, bentonite, sepiolite or hectorite.

The particles of the inorganic material suitably have an average largest particle diameter in the range of 20 nm to 5 µm as determined by transmission electron microscopy (TEM). Preferably, the particles of the inorganic material have an average largest diameter in the range of 25 nm to 2 µm. The advantage of using relatively small particles is that these can easily penetrate pores in the formation surrounding the reservoir, while larger particles may insufficiently penetrate the pores. It is therefore advantageous to pre-treat the particles of the inorganic material so as to prevent aggregate formation. This pre-treatment can for instance involve an ultrasonic treatment or an exfoliation. The pre-treatment may also be carried out after having prepared the liquid composition, but prior to injection into the hydrocarbon reservoir.

The particles of the inorganic material suitably have an aspect ratio in the range of 20-2000. Preferably, the particles of the inorganic material have an aspect ratio in the range of 25-1000.

The amount of particles in the liquid composition is preferably 20 wt.% or less, based on the amount of water in the liquid composition, more preferably 15 wt.% or less, even more preferably in the range of 0.1-10 wt.% These concentrations ensure that the initial viscosity of the liquid composition is sufficiently low.

The liquid composition used in the method of the invention may comprise further additives, such as the usual additives used in fluids for enhanced hydrocarbon recovery. Some examples of suitable additives include surfactants (in particular non-ionic surfactants), corrosion inhibitors, flow improvers, viscosity modifiers, lubricants, etc. These additives can be used to ensure that the fluid is easily injected into the reservoir with minimal detrimental effects on the piping used for the wellbore.

In a further aspect, the invention is directed to the use of a liquid composition as described herein for gelling induced by a change in ion concentration. Apart from having use in enhanced hydrocarbon recovery, the liquid composition as described herein can be used in further applications where a change in ion concentration is used to invoke gelling of the composition.

For example, the liquid composition as described herein can be used as a sensor, by converting from a liquid to a gel when a certain change in ion concentration (e.g. a change in pH) is achieved.

The liquid composition as described herein can further be used in biomedical injectables. For example, the invention enables an injectable implant, device, or scaffold comprising the liquid composition as described herein. Upon injection of the biomedical injectable into the body of an individual (such as a mammal, more preferably a human), the liquid composition can turn into a gel as a consequence of a change in ion concentration, thereby forming for example a useful implant or scaffold without the need of serious surgery. Further biomedical uses of the liquid composition of the invention include controlled release and tissue engineering.

The invention will now be further demonstrated by means of the following experiments.

### Experiment 1

0.6 g of amine terminated polyethylene-co-propylene glycol was dissolved into 15 ml of demineralised water and the mixture was neutralised to a pH value of 7 using 1 M HCl. Subsequently, 1.1 g of laponite was added and again the mixture was neutralised to a pH value of 7 using 1 M HCl. The mixture was exfoliated overnight on a roller. Coupling between the amine terminated polyethylene-co-propylene glycol and laponite occurred by ion exchange. Injecting 3 ml of this composition in an aqueous solution of 33 wt.% of NaCl with a 19-gauche needle lead to gelling of the composition. On the other hand, when 3 ml of this composition was injected in demineralised water the composition immediately dissolved and no gelling was observed.

### Experiment 2

0.25 g of amine terminated poly(N-isopropylacrylamide) was dissolved into 5 ml demineralised water. Subsequently, 0.39 g of sepiolite was added. The mixture was exfoliated overnight on a roller. Coupling between the amine terminated poly(N-isopropylacrylamide) and sepiolite occurred by ion exchange.

Injecting 3 ml of this composition in an aqueous solution of 33 wt.% of NaCl with a 19-gauche needle lead to gelling of the composition. On the other hand, when 3 ml of this composition was injected in demineralised water the composition immediately dissolved and no gelling was observed.

The above experiments demonstrate that the difference in salt concentration can be used as a trigger for inducing gelling of the composition.

## Claims

1. Method for enhanced hydrocarbon recovery comprising
- injecting into a hydrocarbon reservoir a liquid composition that comprises a polymer and particles of an inorganic material in a liquid, wherein the polymer is linked to the particles of the inorganic material by means of a functional group, wherein the polymer has a lower critical solution temperature in the liquid, and wherein the liquid composition exhibits thermo-induced gelling;
- gelling the liquid composition due to a change in concentration of one or more ionic species.

2. Method for enhanced oil recovery according to claim 1, wherein the change in concentration of one or more ionic species is
a) an increase in concentration of one or more ionic species that is provided by
i) ions that are naturally present within the hydrocarbon reservoir; and/or
ii) a prior and/or subsequent injection into the hydrocarbon reservoir of ions, preferably an injection into the hydrocarbon reservoir of a salt solution, or
b) a decrease in concentration of one or more ionic species that is provided by adsorption of the one or more ionic species to formations in the reservoir.

3. Method according to claim 1 or 2, wherein the hydrocarbon comprises oil (such as crude oil) and/or natural gas.

4. Method according to any one of claims 1-3, wherein the change in ion concentration is an increase or decrease of 0.5 wt.% or more based on the amount of water in the liquid composition, preferably an increase or decrease of 1 wt. % of more, such as 5 wt. % or more, 10 wt. % or more, 20 wt. % or more, or 30 wt.% or more.

5. Method according to any one of claims 1-4, further comprising a subsequent step of injecting a liquid into the reservoir to move gelled composition.

6. Method according to any one of claims 1-5, wherein the liquid composition has a complex modulus, |G*|, at 20 °C before injection in the range of 10⁻⁵ - 10³ Pa at 20 °C, as determined by oscillating plate-plate rheology, such as 10⁻³ - 10² Pa, preferably in the range of 10⁻¹- 10² Pa.

7. Method according to any one of claims 1-6, wherein the particles of the inorganic material are linked by a polymer to on average no more than two other particles of the inorganic material.

8. Method according to any one of claims 1-7, wherein the liquid is present in an amount in the range of 60-99 wt.% based on total weight of the composition, preferably in the range of 70-99 wt.%, more preferably in the range of 80-99 wt.%.

9. Method according to any one of claims 1-8, wherein the liquid comprises water, and optionally one or more further solvents, preferably the water is present in an amount of 50 wt.% or more, based on total weight of the liquid.

10. Method according to any one of claims 1-9, wherein the functional group is selected from the group consisting of hydroxyl, amine, epoxide, acid, anhydride, ammonium, carboxylate, sulphate, sulphonate, sulphinate, silane, siloxane, phosphate, phosphonate, phosphinate, phosphite, phosphinite, sulphide, disulphide, maleic acid, phosphine, phosphine oxide, phosphonium, sulphonium, oxonium, ether and aldehyde.

11. Method according to any one of claims 1-10, wherein the polymer comprises one or more selected from the group consisting of polymers and copolymers of acrylamides, methacrylamides, methacrylic acid, hydroxyalkylacrylates, hydroxyalkylmethacrylates, allylamine, oligo(ethylene glycol)methacrylates and N-vinyl-N,N-disubstituted amides (such as N-vinylcaprolactam or vinyl ethylimidazole), poly(vinyl methyl ether), poly(siloxyethylene oxide), xyloglucan, poly(vinyl methyl oxazolidone), poly(vinyl pyrrolidone), poly(N-vinylcaprolactam), poly(phosphazene) derivatives, hyperbranched polyester amides, polymers and copolymers of ethylene glycol and propylene glycol, surfactants containing oligo(ethylene glycol), polymers and copolymers of vinyl acetate and vinyl alcohol, and cellulose derivatives.

12. Method according to any one of claims 1-11, wherein the polymer chains have a number average molecular weight in the range of from 500 - 100 000 g/mol, preferably in the range of from 1000 - 100 000 g/mol as determined by gel permeation chromatography.

13. Method according to any one of claims 1-12, wherein the inorganic material comprises one or more selected from the group consisting of minerals, silicates, metal oxides, synthetic clays, and layered double hydroxides, preferably the inorganic material comprises one or more selected from the group consisting of hydrotalcite, smectite, laponite, bentonite, hectorite, saponite, vermiculite, chlorite, sepiolite, palygorsite, illite, magadiite, and layered double hydroxide,
more preferably the inorganic material comprises one or more selected from the group consisting of hydrotalcite, laponite, bentonite, sepiolite, hectorite and layered double hydroxide.

14. Method according to any one of claims 1-13, wherein the particles have an average largest diameter as determined by transmission electron microscopy in the range of from 20-5000 nm, and/or wherein the amount of particles in the liquid composition is 20 wt.% or less, based on total weight of the liquid composition, preferably 15 wt.% or less, more preferably in the range of 0.1-10 wt.%.

15. Use of a liquid composition as defined in any one of claims 1-14, for gelling induced by a change in ion concentration.
